Europäisches Patentamt

European Patent Office

Office européen des brevets

(11) Veröffentlichungsnummer: **0 016 934**
**B1**

(12) **EUROPÄISCHE PATENTSCHRIFT**

(45) Veröffentlichungstag der Patentschrift:
**17.11.82**

(21) Anmeldenummer: **80100575.2**

(22) Anmeldetag: **05.02.80**

(51) Int. Cl.³: **G 03 B 27/52**, G 02 B 27/18,
G 03 G 15/04

(54) Belichtungseinrichtung für Kopiergeräte.

(30) Priorität: **15.02.79 DE 2905740**

(43) Veröffentlichungstag der Anmeldung:
**15.10.80 Patentblatt 80/21**

(45) Bekanntmachung des Hinweises auf die Patenterteilung:
**17.11.82 Patentblatt 82/46**

(84) Benannte Vertragsstaaten:
**BE CH FR GB NL**

(56) Entgegenhaltungen:
**DE-A-1 572 821**
**DE-A-2 013 894**
**DE-A-2 421 661**
**DE-C-1 203 115**

(73) Patentinhaber: **AGFA-GEVAERT Aktiengesellschaft,
D-5090 Leverkusen 1 (DE)**

(72) Erfinder: **Nötzel, Joachim, Firstalmstasse 11,
D-8000 München 90 (DE)**
Erfinder: **Schätz, Anton, Sachranger Strasse 12,
D-8000 München 90 (DE)**
Erfinder: **Buczek, Harthmuth, Ardeostrasse 6 I,
D-8058 Altenerding (DE)**
Erfinder: **Kirchhof, Günther Dr., Enzianring 68,
D-8021 Taufkirchen (DE)**

BUNDESDRUCKEREI BERLIN

Belichtungseinrichtung für Kopiergeräte

Die Erfindung betrifft eine Belichtungseinrichtung für Kopiergeräte, bei welcher die Vorlage mittels einer relativ zur Vorlage bewegten, von mehreren in entsprechende Führungsnuten eines Objektivgehäuses eingelegten Linsenleisten gebildeten Rasterabbildungsanordnung streifenweise auf einen Aufzeichnungsträger abgebildet wird.

Derartige Belichtungseinrichtungen sind z. B. durch die DE-A-1 572 821, DE-A-2 013 894, DE-Al-2 421 661 und die DE-C-1 203 115 bekannt.

Der Erfindung liegt die Aufgabe zugrunde, eine Belichtungseinrichtung dieser Art in der Weise weiterzubilden, daß sich Maßabweichungen und Längenänderungen der Linsenleiste aufgrund von Fertigungstoleranzen und Umgebungseinflüssen, insbesondere Temperatur- und Feuchtigkeitsschwankungen, in möglichst geringem Maße auf die Abbildungsgüte des Systems auswirken.

Gemäß der Erfindung wird die gestellte Aufgabe durch die im kennzeichnenden Teil des Anspruchs 1 aufgeführten Merkmale gelöst. Ausgestaltungen der Erfindung ergeben sich aus den Unteransprüchen und der Beschreibung, worin im folgenden anhand der Zeichnung ein Ausführungsbeispiel erörtert wird. Es zeigt

Fig. 1 einen Schnitt durch die erfindungsgemäße Belichtungseinrichtung entlang der Linie I-I in Fig. 2,

Fig. 2 einen Schnitt durch die erfindungsgemäße Anordnung entlang der Linie II-II in Fig. 3,

Fig. 3 einen vergrößerten Schnitt durch die Anordnung entlang der Linie III-III in Fig. 2 und

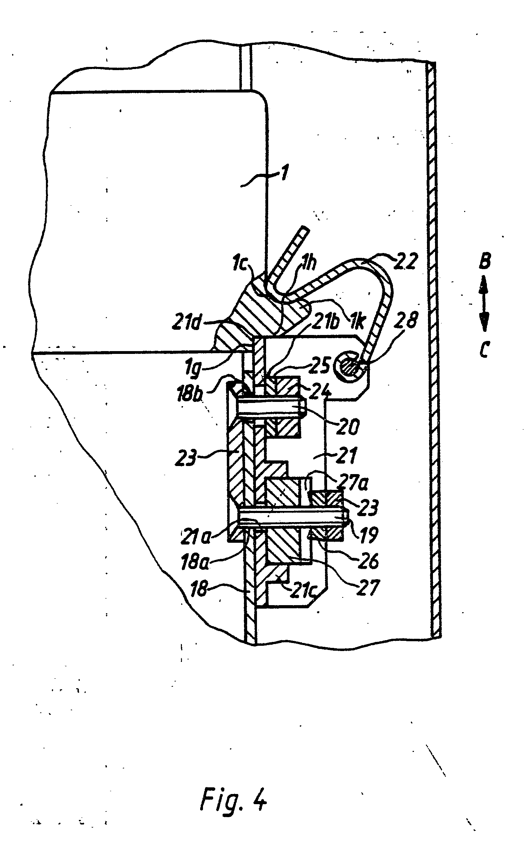

Fig. 4 eine Haltevorrichtung für das Objektivgehäuse.

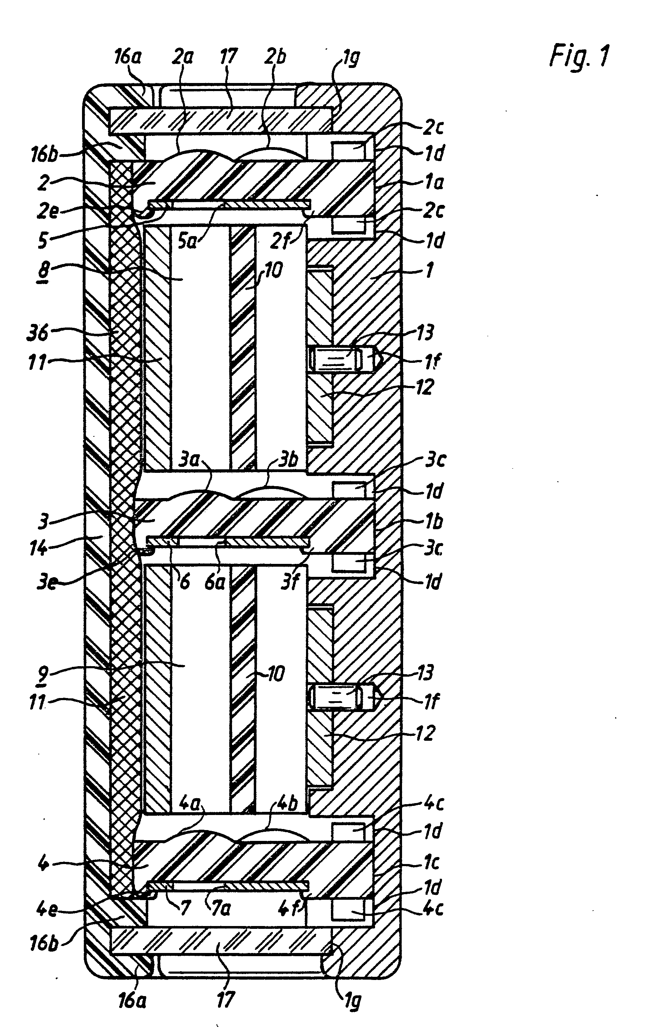

Gemäß den Fig. 1 bis 3 sind in einem aus Zinkspritzguß gefertigten Objektivgehäuse 1 Führungsnuten 1a bis 1c angebracht, in welche einstückig aus Kunststoff, z. B. Polymethylenmethacrylat (PMMA), gespritzte Rasterlinsenleisten 2 bis 4 eingelegt sind. Die Leisten 2 und 4 bilden dabei in bekannter Weise die Abbildungsleisten, während die Leiste 3 eine in der Zwischenbildebene des Abbildungssystems angeordnete Feldlinsenleiste darstellt. Die Linsenleisten tragen jeweils zwei Reihen von Linsen 2a, 2b bzw. 3a, 3b bzw. 4a, 4b, welche, wie aus Fig. 1 ersichtlich ist, jeweils sowohl in Laufrichtung A der Vorlage und des Aufzeichnungsträgers sowie auch quer dazu gegeneinander versetzt sind. Zur Kompensation etwaiger Fertigungsfehler der Linsenleisten werden alle drei Linsenleisten 2—4 jeweils einstückig aus einer Spritzgußform hergestellt und jeweils in gleicher Orientierung in das Gehäuse 1 eingesetzt. Selbstverständlich könnte zur Erzielung einer vollkommenen Feldlinsenwirkung die Feldlinsenleiste 3 auch von zweien der besagten Linsenleisten gebildet werden, welche zusammen etwa die halbe Brennweite bzw. doppelte Brechkraft der Einzellinsenleiste aufweisen.

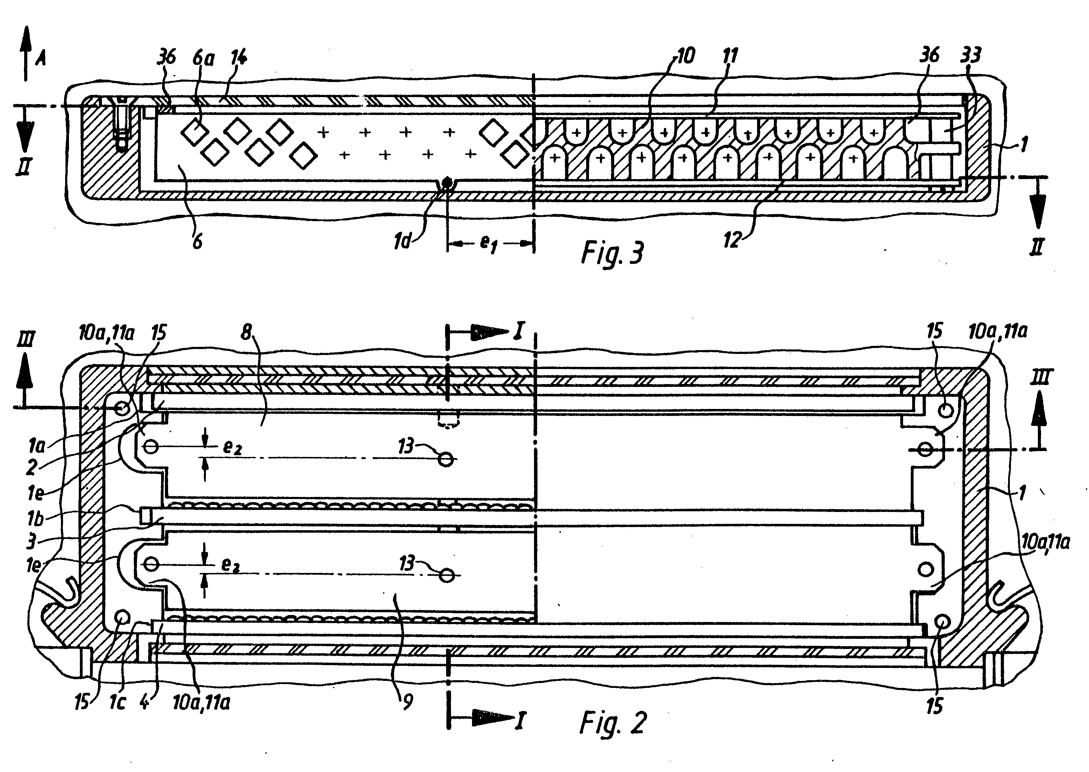

An der unteren Kante der Linsenleisten 2, 3 und 4 sind Zentrieransätze 2c bzw. 3c bzw. 4c angebracht, welche jeweils in Ausnehmungen 1d des Objektivgehäuses 1 eingreifen. Durch diese Zentrieransätze wird die jeweilige Linsenleiste 2 bis 4, deren Führungsnut wie z. B. aus Fig. 2 ersichtlich ist, der Linsenleiste einen gewissen Spielraum gegen Längsverschiebungen läßt, in Richtung ihrer Längsausdehnung im Objektivgehäuse 1 festgelegt. Die Ausnehmungen 1d sind für alle Linsenleisten in einer Ebene angeordnet, welche von der zur Bewegungsrichtung A der Vorlage und des Aufzeichnungsträgers parallelen Symmetrieebene des Gehäuses 1 einen gewissen, wenn auch relativ geringen Abstand e1 aufweist. Dadurch, daß die einzelnen Linsenleisten jeweils nur an einer einzigen, relativ zentral gelegenen Stelle festgelegt sind, wirken sich alle unbeabsichtigten Maßabweichungen der jeweiligen Linsenleiste, sei es infolge von Toleranzabweichungen oder von Maßänderungen aufgrund von Temperatur- und Feuchtigkeitsschwankungen in der Umgebung der Linsenleiste, in etwa gleicher Weise auf die beiden Hälften der Linsenleiste aus. Die für die Abbildungsgüte des Systems hauptsächlich maßgeblichen Relativverschiebungen zwischen den Linsenleisten bleiben dadurch minimal.

Andererseits wird durch die Tatsache, daß die Zentrieransätze 2c bzw. 3c bzw. 4c um einen geringen Betrag e1, der jedoch größer ist als der für Längsverschiebungen der Linsenleiste in ihre jeweilige Führungsnut 1a, 1b oder 1c zur Verfügung stehende Spielraum, gegenüber der Symmetrieebene der Leisten versetzt sind, eine zwangsläufige Orientierung der Leisten im Gehäuse erzwungen. Wenn ferner noch bei der Montage darauf geachtet wird, daß die am unteren Rand der jeweiligen Leiste angeordneten Zentrieransätze 2c bzw. 3c bzw. 4c auch tatsächlich in die dazugehörigen Zentrierausnehmungen 1d eingreifen, ist sichergestellt, daß die jeweilige Leiste in richtiger Orientierung in das Gehäuse 1 eingesetzt wird. Auf diese Weise ist es möglich, auch Leisten mit relativ großen Toleranzabweichungen zu einwandfreien Abbildungssystemen zu kombinieren, wenn nur dafür gesorgt wird, daß es eine Orientierung der Leisten gibt, in welcher sich die Fehler gegenseitig aufheben. Dies ist dann der Fall, wenn alle drei Linsenleisten 2, 3 und 4 jeweils einstückig aus Kunststoff hergestellt und in gleicher Orientierung in das Gehäuse 1 eingesetzt werden.

Wie insbesondere aus Fig. 1 ersichtlich ist, weisen die Linsenleisten 2, 3 und 4 an ihrer Rückseite je einen Bördelrand 2e, 2f bzw. 3e, 3f bzw. 4e, 4f auf, mittels welchem je eine aus streifenförmigem Hart-PVC gestanzte Blendenleiste 5, 6 und 7 festgehalten wird. Die Blendenleisten 5 und 7 weisen kreisrunde Öffnungen 5a bzw. 7a auf und bilden die Aperturblenden zur Begrenzung der wirksamen Öffnung der Linsenelemente 2a, 2b bzw. 4a, 4b. Die Öffnungen 6a der Blendenleiste 6 dienen als Zwischenbildblenden zur Begrenzung des Bildfeldes der Zwischenabbildungen. Wie aus Fig. 3 ersichtlich ist, sind diese Öffnungen als quadratische Öffnungen mit der Bewegungsrichtung A paralleler Diagonale ausgeführt und so bemessen, daß die in Laufrichtung hintereinander liegenden Öffnungsteile sich jeweils zur Gesamtlänge dieser Diagonale ergänzen. Auf diese Weise wird eine gleichmäßige Belichtung des unter dem System hindurchlaufenden Aufzeichnungsträgers gewährleistet.

Um die einzelnen Abbildungskanäle zu trennen, sind zwischen den Linsenleisten Wabenblenden 8 und 9 angeordnet, welche, wie aus Fig. 3 ersichtlich ist, jeweils von einem aus Kunststoff, z. B. Acrylnitril-Butadienstyrolkopolimerisat (ABS) gespritzten Wabenkörper 10 gebildet werden, dessen Wabenöffnungen zu beiden Seiten durch je eine Metalleiste 11 bzw. 12 abgedeckt sind. Die Abdeckleisten 11 und 12 sind miteinander und mit dem Blendenkörper 10 mittels eines Schraubbolzens 33 verbunden. Wie insbesondere aus Fig. 2 ersichtlich ist, sind an den Enden der Abdeckleisten 11 und 12 Führungsansätze 10a und 11a ausgebildet, welche in Aussparungen 1e des Gehäuses 1 eingreifen. Die Symmetrieachse dieser Führungsansätze ist gegenüber den Symmetrieachsen der Wabenblenden 8 und 9 jeweils um den Betrag e2 versetzt, so daß auch diese Wabenblenden, an deren Unterseite in jeweils eine Gehäusebohrung 1f eingreifende Fixierstifte 13 eingesetzt sind, nur in jeweils einer einzigen Orientierung in das Gehäuse eingesetzt werden können.

Sowohl die Wabenblenden 8 und 9 als auch die Linsenleisten 2, 3 und 4 werden nach dem Einsetzen in das Gehäuse mittels eines aus Kunststoff, z. B. Polycarbonat (PC), gefertigten Deckels 14 in ihrer Lage gehalten. Der Deckel ist mittels Schrauben 15 am Gehäuse 1 befestigt und drückt unter Zwischenlage von elastischen Schaumstoffstreifen 36 auf die Oberkanten der Linsenleisten und Wabenblenden. Am vorderen und hinteren Rand des Deckels 14 sind leistenartige Fortsätze 16a und 16b ausgebildet, welche den oberen Rand je eines in eine Ausnehmung 1g des Gehäuses 1 eingekitteten Deckglases 17 umfassen und dadurch nach Art einer Labyrinthdichtung das Eindringen von Staub und Feuchtigkeit entlang des Deckglasrandes in das Gehäuseinnere verhindern.

Gemäß Fig. 3 sind an einer Geräteplatine 18 jeweils mittels Schrauben 19 und 20 Halterungen 21 für am Gerätegehäuse 1 angebrachte Haltenasen 1k befestigt. Die Schraubenbolzen 19 und 20 sind in ein Verbindungsstück 23 eingenietet und durch Bohrungen 18a und 18b der Platine 18 sowie Langlöcher 21a und 21b des Haltestückes 21 gesteckt. Auf die Schraubenbolzen 19 und 20 sind Befestigungsmuttern 23 und 24 aufgeschraubt, welche unter Zwischenlage von Beilagscheiben 25 und 26 das Haltestück 21 an der Platine 18 festklemmen. Zwischen die Beilagscheibe 26 und das Haltestück 21 ist noch ein Exzenter 27 eingelegt, welcher einen Verstellschlitz 27a trägt. Der auf dem Schraubbolzen 19 gelagerte Exzenter 27 ist mit seinem äußeren Umfang in einem ringförmigen Flansch 21c des Haltestücks 21 gelagert. Durch Einsetzen eines geeigneten Werkzeuges in den Verstellschlitz 27a und Drehen des Exzenters um den Schraubenbolzen 19 vor dem Anziehen der Schraube 23 kann das an den Langlöchern 21a und 21b geführte Haltestück 21 in Pfeilrichtung B—C verstellt werden. Dadurch ist es möglich, die realtive Lage des mittels Anschlagflächen 1g und 1h einer Kante 21d des Haltestücks 21 aufliegenden Gehäuses 1 und damit des gesamten Rasterabbildungssystems gegenüber Vorlage und Kopie zu justieren.

Nach dem Einsetzen in das Gerät wird das Gehäuse 1 mittels der Rastfedern 22 gehalten, welche in Rastvertiefungen 1i der Haltenasen 1k des Objektivgehäuses 1 einrasten. Die Rastfedern 22 sind geräteseitig an einem Stift 28 angelenkt, welcher an dem Haltestück 21 befestigt ist.

## Patentansprüche

1. Belichtungseinrichtung für Kopiergeräte, bei welcher die Vorlage mittels einer relativ zur Vorlage bewegten, von mehreren Linsenleisten, die in parallel zu ihrer Längsausdehnung verlaufenden Führungsnuten eines Objektivgehäuses eingelegt sind, gebildeten Rasterabbildungsanordnung streifenweise auf einen Aufzeichnungträger abgebildet wird, dadurch gekennzeichnet, daß die Linsenleisten (2—4) in ihrer Längsrichtung frei beweglich in den Führungsnuten (1a—1c) geführt und an jeweils einer Stelle mittels in entsprechende Gehäuseaussparungen (1d) eingreifender Zentrieransätze (2c—4c) gegen Längsverschiebungen gesichert sind, wobei diese Gehäuseaussparungen in einer gemeinsamen, senkrecht und etwa mittig zur Längsausdehnung der Führungsnuten verlaufenden Ebene angeordnet sind.

2. Belichtungseinrichtung nach Anspruch 1, dadurch gekennzeichnet, daß neben den Linsenleisten (2—4) auch zur Steuerung der Ausleuchtung und zur Vermeidung von Überstrahlungen zwischen den Abbildungsstrahlengängen erforderliche Apertur-, Bildfeld- und Trennblenden (5—9) der Rasterabbildungsanordnung längsverschieblich im Gehäuse (1) geführt und mittels Zentrieransätzen (13) zentriert sind, die in Gehäusebohrungen (1f) eingreifen, die in der Ebene der Gehäuseaussparungen (1d) für die Zentrieransätze (2c—4c) der Linsenleisten (2—4) liegen.

3. Belichtungseinrichtung nach einem der vorhergehenden Ansprüche, dadurch gekennzeichnet, daß sowohl die vorlagen- als auch die bildseitigen Linsenleisten (2, 4), und ggf. auch eine in einer Zwischenbildebene angeordnete Feldlinsenleiste (3), gleiche Form und Abmessung haben und jeweils einstückig aus Kunststoff gespritzt sind, daß diese Leisten in jeweils gleicher Orientierung in das Objektivgehäuse (1) eingesetzt sind, und daß jede der Linsenleisten (2—4) zur Erzielung einer zwangsläufigen Orientierung mit mindestens einem Zentrieransatz (2c—4c) versehen ist, welcher außerhalb der Symmetrieebenen der Leiste angeordnet ist.

## Claims

1. Exposure divice for copying apparatus in the case of which an image of the original is formed strip by strip on a recording support by means of a grid imaging arrangement moved relative to the original and formed by a plurality of strips of lenses which are inserted in guide grooves, running parallel to their length, of an objective housing characterised in that the strips (2—4) of lenses are guided in the guide grooves (1a—1c) so that they can move freely in their longitudinal direction, and are secured against longitudinal displacements at, in each case, one place by means of centring projections (2c—4c) engaging corresponding housing recesses (1d), these housing recesses being arranged in a common plane running perpendicular to and approximately centrally of the lenght of the guide grooves.

2. Exposure device according to claim 1, characterised in that, in addition to the strips (2—4) of lenses, also aperture diaphragms, image field diaphragms and separating diaphragms (5—9) of the grid imaging arrangement which are necessary for controlling the illumination and for avoiding scattering between the image ray paths are guided so that they are longitudinally displaceable in the housing (1) and are centred by means of centring projections (13) which engage housing bores (1f) which lie in the plane of the housing recesses (1d) for the centring projections (2c—4c) of the strips (2—4) of lenses.

3. Exposure device according to one of the preceding claims, characterised in that the strips (2, 4) of lenses both on the original side and on the image side, and optionally also a strip (3) of field lenses arranged in an intermediate image plane, have the same shape and dimensions and, in each case, are injection-moulded in one piece from plastics material, these strips are inserted in the objective housing (1) in the same orientation in each case and, to achieve a necessary orientation, each of the strips (2—4) of lenses is provided with at least one centring projection (2c—4c) which is arranged outside the planes of symmetry of the strip.

## Revendications

1. Dispositif d'exposition pour photocopieurs, dans lequel l'original est reproduit par bandes successives sur un support d'enregistrement à l'aide d'un système de reproduction par trame, qui est déplacé relativement à l'original et qui est constitué de plusieurs baguettes (2 à 4) formant lentilles qui sont introduites dans des gorges de guidage d'un boîtier d'objectif s'étendant parallèlement à la dimension longitudinale des baguettes, caractérisé en ce que les baguettes (2 à 4) formant lentilles sont guidées avec libre possibilité de déplacement suivant leur direction longitudinale dans les gorges (1a à 1c) de guidage et en un emplacement sont empêchées de se déplacer longitudinalement à l'aide de pions (2c à 4c) de centrage pénétrant dans des évidements (1d) correspondants du boîtier, ces évidements étant ménagés dans un plan commun, vertical et s'étendant à peu près au milieu de la dimension longitudinale des gorges de guidage.

2. Dispositif d'exposition suivant la revendication 1, caractérisé en ce que, outre les baguettes (2 à 4) formant lentilles, les diaphragmes (5 à 9) d'ouverture, de délimitation du champ de l'image et de séparation du système de reproduction par trame, nécessaires pour se rendre maître de l'éclairement et pour empêcher une superposition des trajets des faisceaux de reproduction, sont guidés, avec possibilité de coulissement longitudinal, dans le boîtier (1) et sont centrés à l'aide de pions (13) de centrage pénétrant dans des alésages (1f) du boîtier, qui se trouvent dans le plan des évidements (1d) pour les pions (2c à 4c) de centrage des baguettes (2 à 4) formant lentilles.

3. Dispositif d'exposition suivant l'une des revendications précédentes, caractérisé en ce qu'aussi bien la baguette (2, 4) formant lentille du côté de l'original que celle du côté de l'image et, le cas échéant, qu'une baguette (3) formant lentille de champ placée dans le plan image intermédiaire ont la même forme et la même dimension et sont fabriquées d'une pièce en matière plastique par injection, en ce que ces baguettes sont introduites dans le boîtier (1) d'objectif en ayant chaque fois la même orientation et en ce que chacune des baguettes (2 à 4) formant lentilles est munie, pour l'obtention d'une orientation obligatoire, d'au moins un pion (2c à 4c) de centrage qui est disposé en dehors du plan de symétrie de la baguette.

Fig. 1

0 016 934

Fig. 3

Fig. 2

0 016 934

Fig. 4